# EUROPEAN PATENT SPECIFICATION

(11) **EP 1 863 045 B1**
(45) Date of publication and mention of the grant of the patent: **24.04.2013**
(21) Application number: 06729460.3
(22) Date of filing: 20.03.2006
(51) Int. Cl.: H01G 11/38, H01G 11/24, H01G 11/86

(54) **POLARIZABLE ELECTRODE, CAPACITOR USING SAME, AND METHOD FOR MANUFACTURING POLARIZABLE ELECTRODE**
POLARISIERBARE ELEKTRODE, DIESE VERWENDENDER KONDENSATOR UND VERFAHREN ZUR HERSTELLUNG EINER POLARISIERBAREN ELEKTRODE
ÉLECTRODE POLARISABLE, CONDENSATEUR L'UTILISANT ET PROCÉDÉ DE FABRICATION DE L ÉLECTRODE POLARISABLE

(30) Priority: 25.03.2005 JP 2005087845
(43) Date of publication of application: 05.12.2007
(73) Proprietor: Panasonic Corporation, Kadoma-shi Osaka 571-8501 (JP)
(72) Inventor: IMAMURA, Keisuke, Osaka-shi, Osaka 540-6207 (JP); YAMADA, Chiho, Osaka-shi, Osaka 540-6207 (JP); SAKATA, Motohiro, Osaka-shi, Osaka 540-6207 (JP)
(74) Representative: Pautex Schneider, Nicole Véronique
(86) International application number: PCT/JP2006/305492
(87) International publication number: WO 2006/103967

(56) References cited:
- EP-A1- 1 256 966
- WO-A1-98/58397
- FR-A1- 2 793 600
- JP-A- 04 162 510
- JP-A- 08 055 761
- JP-A- 2000 306 784

## Description

### TECHNICAL FIELD

The present invention relates to a polarizable electrode, a capacitor using the polarizable electrode, and a method for manufacturing the polarizable electrode.

### BACKGROUND ART

A conventional polarizable electrode includes a collector and a polarizable electrode layer provided on the surface of the collector. The polarizable electrode layer contains at least activated carbon, a conductive agent, and two kinds of a binder. Such a polarizable electrode is disclosed in Unexamined Japanese Patent Publication No. H11-102844, Unexamined Japanese Patent Publication No. 2000-12404, and Unexamined Japanese Patent Publication No. 2001-307965, for example.

A capacitor using a polarizable electrode is required to have high capacity and reduced direct current resistance at low temperature. That is, since a diffusion rate of ions in a binder layer such as carboxymethyl cellulose is low in the polarizable electrode at low temperature, the direct current resistance is large. Therefore, it is required to reduce a binder amount. However, if the binder amount is reduced, it is hard to form the polarizable electrode layer or hold the shape of the layer even if the layer can be formed.

Further, in order to reduce the direct current resistance, it is needed to make the polarizable electrode layer thin. However, an enough amount of binder is needed to stably form a thin polarizable electrode layer. Further, although it is necessary to use activated carbon having a small particle diameter in order to make the polarizable electrode layer thin, such activated carbon has a large surface area. Thus, more amount of binder is necessary, and when the binder amount is reduced, it is more difficult to form the polarizable electrode layer. Further, a thickness allowing to stably coat an electrode paste by a general roll coater without using a binder is limited to about 150 µm as a thinner limit. The binder is a direct current resistance component.

EP 0948005 discloses an electric double layer capacitor for large capacity used in regeneration or electric power storage for various electric appliances and electric vehicles, and its manufacturing method. As the resin to be used in the current collector, by adding low softening point resin, polytetrafluoroethylene resin, latex resin or the like, the flexibility, thick coating performance and winding performance are improved. By preparing the electrode solution for making such current collector by using a high pressure dispersion machine, the capacity and density of the current collector can be enhanced substantially. According to this manufacturing method, the electric double layer capacitor may be further increased in size, increased in capacity and lowered in cost.

EP 1256966 discloses an electric double layer capacitor having increased electrode density and decreased resistance and a method for manufacture the same. A binder comprising butadiene-styrene, carboxymethyl cellulose, and polytetrafluoroethylene is prepared and mixed with activated carbon powder and carbon black to obtain a slurry mixture. The mixture is then coated on a charge collecting body to form an electrode and subjected to a pressing process to obtain a resulting electric double layer capacitor having 20% increased electrode density and 50% reduced resistance.

### DISCLOSURE OF THE INVENTION

The present invention is to increase capacity of a capacitor having a polarizable electrode and reduce the direct current resistance at low temperature. The present invention relates to a polarizable electrode according to claim 1. In the polarizable electrode, the amount of the first binder is reduced so that the layer thickness of the first binder covering the activated carbon can be thin. Therefore, capacity of a capacitor can be increased, and reducing a diffusion rate of ions in a binder layer at low temperature can be suppressed. Further, the present invention relates to a method for manufacturing the polarizable electrode according to claim 3. By this way, while reducing the content of a first binder, the polarizable electrode layer can be formed so as to have a thickness of 5 µm or more and 130 µm or less.

### BRIEF DESCRIPTION OF THE DRAWINGS

FIG. 1 is a partial cutout perspective view of a capacitor according to an exemplary embodiment of the present invention.
FIG. 2 is a schematic structure view of the capacitor shown in FIG.1.
FIG. 3 is a flowchart illustrating a method for manufacturing a polarizable electrode shown in the capacitor in FIG. 1.
FIG. 4 is an illustration showing a method for coating an electrode paste to a collector in the capacitor shown in FIG. 1.
FIG. 5 is an illustration showing another method for coating the electrode paste to the collector in the capacitor shown in FIG. 1.

### REFERENCE MARKS IN THE DRAWINGS

| | |
|---|---|
| 1A | first collector |
| 1B | second collector |
| 2A | first polarizable electrode layer |
| 2B | second polarizable electrode layer |
| 3A | first polarizable electrode |
| 3B | second polarizable electrode |
| 4 | case |
| 5 | separator |
| 6 | electrolyte |
| 7 | lead |
| 8 | sealing material |
| 11 | activated carbon |
| 12 | conductive agent |
| 13 | first binder |
| 14 | second binder |
| 15 | dispersion medium |
| 16 | electrode paste |
| 21 | comma roll |
| 22, 33 | supporting roll |
| 23 | paste holder |
| 31 | first metal mold |
| 32 | second metal mold |
| 34 | groove |
| 35 | nozzle part |

### DETAILED DESCRIPTION OF THE INVENTION

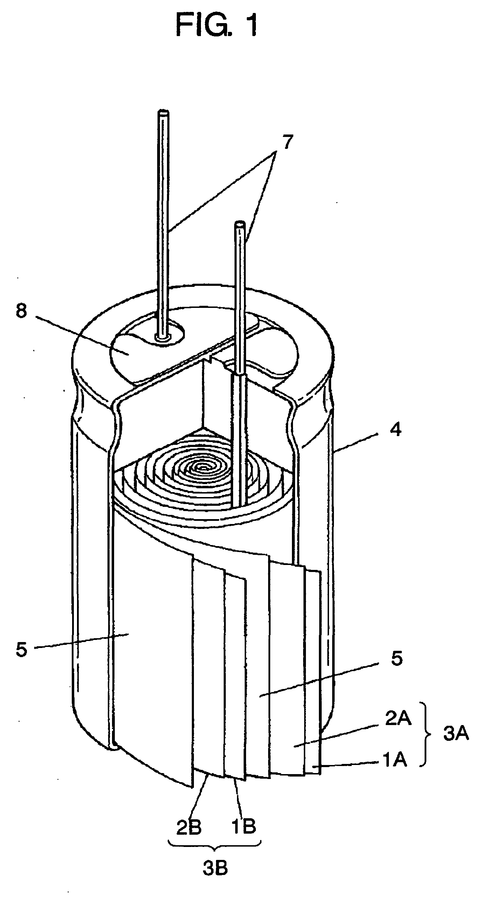

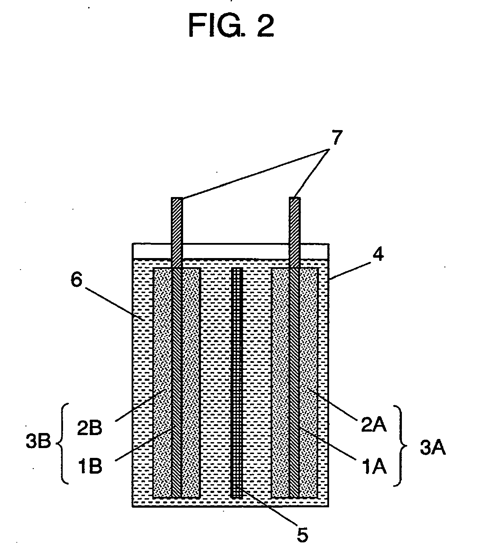

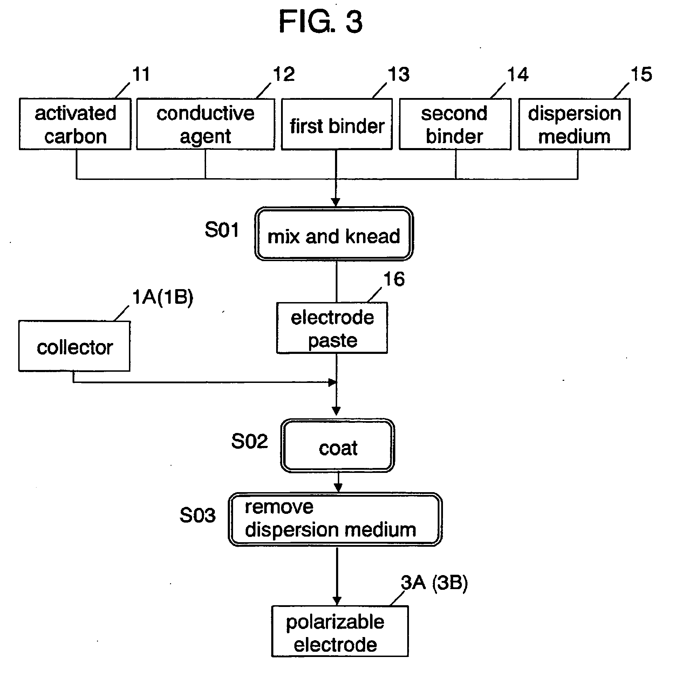

FIG. 1 is a partial cutout perspective view of a capacitor according to an exemplary embodiment of the present invention. FIG. 2 is a schematic structure view thereof. FIG. 3 is a flowchart illustrating a method for manufacturing a polarizable electrode. The capacitor includes first and second polarizable electrodes (hereinafter, referred to as electrodes) 3A and 3B, separator 5 disposed between electrodes 3A and 3B, case 4 accommodating them therein, and electrolyte 6 filled in case 4.

Electrodes 3A and 3B are connected with leads 7, respectively. Electrolyte 6 is filled between electrodes 3A, 3B and separator 5. Electrodes 3A and 3B are wound through separator 5 therebetween. Sealing material 8 seals an opening of case 4. Sealing material 8 is provided with a through hole so that leads 7 are drawn out. Case 4 is made of aluminum, for example.

Electrode 3A includes first collector (hereinafter, referred to as a collector) 1A and first polarizable electrode layer (hereinafter, referred to as an electrode layer) 2A provided on the surface of collector 1A. Electrode 3B similarly includes second collector (hereinafter, referred to as a collector) 1B and second electrode layer (hereinafter, referred to as an electrode layer) 2B provided on the surface of collector 1B. Since electrode 3B has a similar structure to that of electrode 3A, description of electrode 3B will be omitted in below if there is no special situation.

Belt-like collector 1A is made of a metallic foil. Electrode layer 2A contains activated carbon 11, conductive agent 12, first binder 13, and second binder 14.

For example, a highly-pure aluminum foil (Al: 99.99%) having a thickness of 20 µm can be used as collector 1A. Further, roughing the surface of collector 1A is preferable because a contacting area between collector 1A and electrode layer 2A is increased so that conductivity is improved and contacting strength is increased. As the method to rough the surface of a collector, a method to electrolytically etch the collector in an etching liquid including hydrochloric acid, a method to chemically and/or electrically etch the collector in an acidic solution, and the like can be applicable, but the method is not especially limited. If the surface of collector 1A can be roughed, the other methods can be used.

Further, as collector 1A, other valve metal such as tantalum, titanium, and the like can be used, or an alloy including one of those elements so as to generate a valve operation, for example, an aluminum based alloy including titanium, can be used. Highly-pure aluminum is the most preferable.

In addition, it is necessary that collector 1A has an enough tensile strength so as not to break electrodes 3A and 3B when winding those. On the other hand, it is required that much of activated carbon 11 is filled in case 4 having a fixed volume. Therefore, the thickness of collector 1A is preferably 10 µm to 50 µm.

Separator 5 is provided in order to prevent electrodes 3A and 3B from mutually contacting to be short-circuited as a capacitor. As separator 5, various kinds of an insulating sheet, e.g., a paper can be used. Such a sheet has fine continuous holes, does not change in quality by electrolyte 6, and is easily wetted with electrolyte 6.

When a nonaqueous electrolyte having a high decomposition voltage is used as electrolyte 6, the withstanding voltage of a capacitor can be increased so as to easily make the capacitor having a high energy density. For the nonaqueous electrolyte, material having high electric conductivity and small temperature dependence of the electric conductivity is preferably used. More particularly, it is preferable to use a solution made by dissolving a solute of one or more kinds of tetraethylammonium tetrafluoroborate, ethylmethylimidazolium tetrafluoroborate, ethyldimethylimidazolium tetrafluoroborate, and the like in a solvent such as propylene carbonate as electrolyte 6. However, the solvent and the solute are not especially limited.

As electrolyte 6, a solution prepared by dissolving the above-described solute in propylene carbonate to have a concentration of 0.5 M (mol·dm⁻³) to 1.5 M is desirably used in order to obtain proper conductivity. The solution having a concentration of less than 0.5 M contains a small amount of ions, so that the resistance as a capacitor is large, and the solution having a concentration of more than 1.5 M has high viscosity, so that the diffusion rate of ions is lowered and the resistance becomes large.

Next, a process of forming electrode layer 2A on the surface of collector 1A will be described with reference to FIG. 3. Activated carbon 11, conductive agent 12, first and second binders 13 and 14, and dispersion medium 15 are mixed, kneaded, and dispersed (S01). Accordingly, electrode paste 16 is prepared. Then, electrode paste 16 is coated on collector 1A made of a metallic foil (S02). Dispersion medium 15 is then removed (S03): Accordingly, electrode 3A is formed. In addition, a process of pressurizing electrode 3A can be carried out after S03, if necessary.

For preparing electrode paste 16 (S01), a device such as a mixing/stirring machine of planetary-motion type, a high pressure dispersing machine, a high-speed mixer of thin-film revolving type, a high-speed dispersing machine, and a high-speed emulsifying/dispersing machine can be used. The device is not particularly limited, and any device can be used as long as it can operate to mix, knead, and disperse activated carbon 11, conductive agent 12, first and second binders 13 and 14, and dispersion medium 15. Further, two or more kinds of devices can be used so as to mix, knead, and disperse activated carbon 11, conductive agent 12, first and second binders 13 and 14, and dispersion medium 15 in two or more processes.

In addition, a weight ratio of the solid part in electrode paste 16 is preferably from 10% by weight to 50% by weight, inclusive of both boundaries. When the weight ratio of the solid part in electrode paste 16 is less than 10% by weight, the density of electrode layer 2A is low, so that the amount of activated carbon 11 in electrode layer 2A is small. Therefore, the capacity of the capacitor is reduced. On the other hand, when the weight ratio of the solid part in electrode paste 16 is more than 50% by weight, the solid part is not fully wetted with dispersion medium 15, so that electrode paste 16 cannot be made.

When the dispersibility of electrode paste 16 is enhanced, the viscosity of electrode paste 16 measured at a predetermined shearing rate is reduced. Further, the TI value as an index indicating thixotropy of electrode paste 16 becomes small, and thus variation of thickness in coating electrode paste 16 on collector 1A can be reduced. The TI value of electrode paste 16 is preferably from 1 to 100, inclusive of both boundaries. When the TI value is less than 1, the viscosity is high when a high shearing rate is applied to electrode paste 16, and thus a uniform thickness of electrode layer 2A cannot be obtained. On the other hand, when the TI value is more than 100, the viscosity is too low when a high shearing rate is applied to electrode paste 16, and thus a uniform thickness of electrode layer 2A cannot be obtained. Here, the TI value is an index obtained by dividing the viscosity at a low shearing rate by the viscosity at a high shearing rate.

A device such as a doctor blade coater, a comma coater, a die coater, a gravure coater, and a micro gravure coater can be used when coating electrode paste 16 on collector 1A (S02). The device is not particularly limited, and any device can be used as long as it can thinly coat electrode paste 16 on collector 1A. In order to form electrode layer 2A having a thickness of 5 µm to 130 µm in particular, a comma coater or a die coater is preferably used.

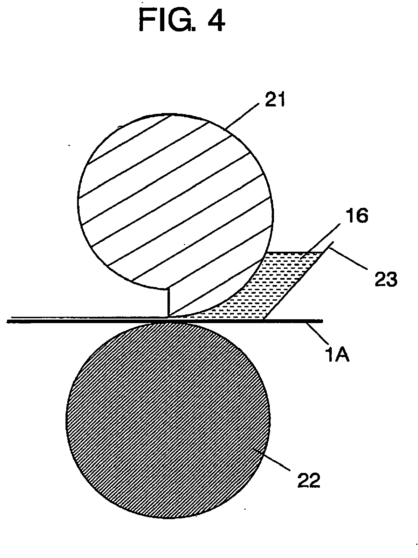

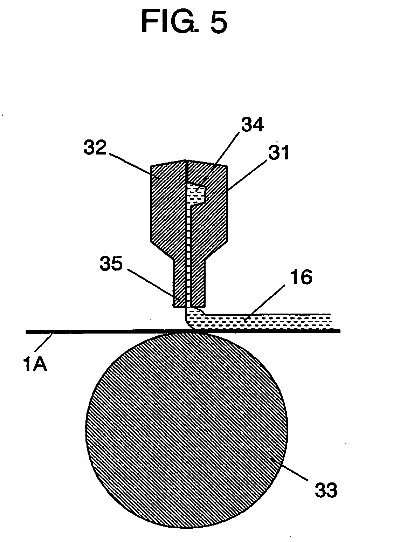

Here, structures of the comma coater and the die coater will be described with reference to the drawings. FIGs. 4 and 5 are cross sectional views illustrating schematic structures of the comma coater and the die coater.

With reference to FIG. 4, the comma coater includes comma roll 21, supporting roll 22, and paste holder 23. Comma roll 21 is disposed with respect to supporting roll 22 via a predetermined gap formed therebetween. Paste holder 23 holds electrode paste 16. Collector 1A is passed through the gap along supporting roll 22.

When collector 1A is fed in a direction opposite paste holder 23 in the above-described structure, electrode paste 16 is coated on collector 1A while being regulated by the gap between comma roll 21 and supporting roll 22. The thickness of electrode paste 16 is thus determined by the gap between comma roll 21 and supporting roll 22. This method is easily carried out and the cost therefor is low.

Next, the die coater will be described. With reference to FIG. 5, the die coater includes first and second metal molds 31 and 32, and supporting roll 33. First metal mold 31 is provided with groove 34. Groove 34 constitutes a flow passage for electrode paste 16 in the state where first and second metal molds 31 and 32 are combined with each other. Lower ends of first and second metal molds 31 and 32 constitute nozzle part 35. Supporting roll 33 is disposed below combined first and second metal molds 31 and 32 via a predetermined gap therebetween. Collector 1A is passed through the gap along supporting roll 33.

While collector 1A is fed along supporting roll 33 in the above-described structure, electrode paste 16 is supplied to nozzle part 35 by a pump (not shown) through the flow passage constituted by groove 34. Further, electrode paste 16 is coated on collector 1A from nozzle part 35. The thickness of electrode paste 16 is determined by the flow rate of the pump (not shown). According to this method, the thickness of electrode paste 16 is easily controlled, and the variation of thickness of electrode paste 16 can be reduced in comparison to the method using the comma coater.

In S02, the temperature of electrode paste 16 is preferably from 15°C to 40°C, inclusive of both boundaries. When the temperature of electrode paste 16 is lower than 15°C, the viscosity of electrode paste 16 is high, and thus electrode paste 16 cannot be coated evenly on collector 1A. When the temperature of electrode paste 16 is more than 40°C, dispersion medium 15 in electrode paste 16 is evaporated. Therefore, the weight ratio of the solid part of electrode paste 16 becomes higher than that at the time of mixing, kneading, and dispersing, and thus the viscosity of electrode paste 16 is increased. As a result, the variation of thickness in coating electrode paste 16 on collector 1A is increased. Further, when dispersion medium 15 in electrode paste 16 is evaporated in a significant amount, the solid part in electrode paste 16 is deposited, and thus streaks may occur in electrode layer 2A, or the surface of electrode layer 2A may become irregular.

Further, in forming electrode layer 2A by coating electrode paste 16 on collector 1A, and drying and removing dispersion medium 15, the thickness of electrode layer 2A is preferably from 5 µm to 130 µm, inclusive of both boundaries. When pressing is carried out after S03, the thickness of electrode layer 2A after pressing is preferably made to be 5 µm to 130 µm, inclusive of both boundaries. Electrode layer 2A may be provided on only one surface of collector 1A. However, it is preferable to provide electrode layer 2A on both surfaces of collector 1A by coating electrode paste 16 in order to increase the capacity of the capacitor. In the meantime, the thickness of electrode layer 2A means the thickness of electrode layer 2A on one side of collector 1A in the present embodiment.

Even though attempts are made to adjust the thickness of electrode layer 2A to be less than 5 µm, and the comma coater or the die coater is used therefor, it is difficult to coat electrode paste 16 on collector 1A without causing variation of thickness. On the other hand, when the thickness of electrode layer 2A is adjusted to be more than 130 µm without using an adhesive between electrode layer 2A and collector 1A, adhesion strength between collector 1A and electrode layer 2A and adhesion strength between the solid parts in electrode layer 2A are small. Thus, electrode layer 2A is easily peeled off from collector 1A, and electrode 3A cannot be obtained stably. Therefore, the thickness of electrode layer 2A is preferably from 5 µm to 130 µm, inclusive of both boundaries. Further, in order to reduce the resistance of the capacitor, the thickness of electrode layer 2A is preferably 50 µm or less. Furthermore, in order to reduce the variation of thickness of electrode layer 2A and reduce the resistance of the capacitor, the thickness of electrode layer 2A is preferably from three times the particle diameter of the activated carbon to 50µm, inclusive of both boundaries.

In addition, electrode layer 2A can be coated on approximately the entire surface of collector 1A. However, in order to improve productivity, a stripe coating is preferably carried out so as to form two or more strips of electrode layers 2A. As a result, three or more uncoated parts are formed. The uncoated parts are used for current-collecting. Through the stripe coating, electrodes 3A with the uncoated part can be formed by carrying out the coating just once.

When water as dispersion medium 15 is evaporated and removed (S03) after coating electrode paste 16 on collector 1A, electrode paste 16 is preferably dried at a temperature of 130°C or less. In order to rapidly dry electrode paste 16, it is preferable that electrode paste 16 is dried at as high a temperature as possible. However, when electrode paste 16 is dried at a temperature of higher than 130°C, electrode paste 16 is probably bumped. In this case, smooth electrode layer 2A cannot be obtained.

In order to improve the density of electrode layer 2A made by coating electrode paste 16 on collector 1A and drying dispersion medium 15, electrode 3A can be pressed as described above. If the density of electrode layer 2A can be improved, the weight of activated carbon 11 contained in a unit volume is increased, and thus the capacity of the capacitor can be increased. As a method for pressing electrode 3A, press working, calendaring, or the like may be employed, but the method is not particularly limited. Any method can be used as long as electrode 3A can be pressed. Further, as a device for pressing electrode 3A, a roll press machine, a calendar machine, or the like may be used. However, the device is not particularly limited, and any device can be used as long as it can press electrode 3A.

It is preferable that electrode 3A is pressed such that the thickness of electrode layer 2A after the press process is within the range of 50% to 99%, inclusive of both boundaries of the thickness of electrode layer 2A before the press process. When the thickness of electrode layer 2A after the press process is made thin to be less than 50% of the thickness of electrode layer 2A before the press process, a sufficient amount of electrolyte 6 cannot be impregnated into electrode 3A since sufficient void spaces in electrode layer 2A cannot be secured. When the thickness of electrode layer 2A after the press process is made thick to be more than 99% of the thickness of electrode layer 2A before the press process, the effect of increasing the density of electrode layer 2A cannot be obtained.

Next, materials for electrode layer 2A and a blending ratio thereof will be described. Activated carbon 11 includes ones based on plants such as coconut, petroleum cokes, pitch, phenol resins, or the like, but is not particularly limited. Other kinds of activated carbon 11 can also be used. In order to increase the capacity of the capacitor, the contacting area between activated carbon 11 as a solid and electrolyte 6 as a liquid is preferably increased. In particular, the specific surface area of activated carbon 11 is smaller than 100 m²/g, the capacity of the capacitor cannot be increased since the contacting area between the solid and the liquid is too small. On the other hand, when the specific surface area of activated carbon 11 is larger than 2,700 m²/g, the contacting area between the solid and the liquid per unit weight is large, but the density of activated carbon 11 is low. Therefore, the weight of activated carbon 11 contained in electrode layer 2A is small so that the contacting area between the solid and the liquid becomes small. Thus, the capacity of the capacitor cannot be increased. In view of the above, the specific surface area of activated carbon 11 is preferably from 100 m²/g to 2,700 m²/g, inclusive of both boundaries.

In order to make the specific surface area of activated carbon 11 to be 100 m²/g to 2,700 m²/g, an activation treatment such as a chemical activation method, e.g., a KOH activation method, and a steam activation method can be employed. However, the processing method is not particularly limited, and any method can be used as long as the specific surface area of activated carbon 11 can be made to be 100 m²/g to 2,700 m²/g.

Further, when average particle diameter D₅₀ of activated carbon 11 is less than 2 µm, the surface area of activated carbon 11 is increased due to the small average particle diameter D₅₀. Thus, the processing such as mixing, kneading and dispersing cannot be carried out and uniform electrode paste 16 cannot be obtained unless the additive amounts of first and second binders 13 and 14 are increased. Therefore, the resistance of the capacitor cannot be reduced. On the other hand, when average particle diameter D₅₀ of activated carbon 11 is more than 5 µm, diffusion resistance within activated carbon 11 becomes large, and thus the effect of reducing the resistance of the capacitor at low temperature cannot be expected. Further, in order to reduce the resistance of the capacitor, it is effective to make the thickness of electrode layer 2A thin to increase the area of electrode 3A to be accommodated in case 4. However, electrode layer 2A cannot be formed when the expected thickness thereof is less than the particle diameter. Furthermore, in order to reduce the variation of thickness of electrode layer 2A, the thickness of electrode layer 2A is preferably three times the particle diameter of the activated carbon or more. Thus, average particle diameter D₅₀ of activated carbon 11 is preferably from 2 µm to 5 µm, inclusive of both boundaries.

The higher the ratio of activated carbon 11 in the solid part is, the thinner the layer thicknesses of first and second binders 13 and 14 covering the surface of activated carbon 11 are. Thus, reduction in the diffusion rate of ions at low temperature can be suppressed, and the resistance of the capacitor can be reduced. Further, since the weight of activated carbon 11 contained in electrode layer 2A is increased, the capacity of the capacitor can be increased. More specifically, the blending ratio of activated carbon 11 is preferably 80% by weight or more with respect to the total weight of activated carbon 11, conductive agent 12, and first and second binders 13 and 14.

As conductive agent 12, a carbon material, a conductive organic polymer material, or a metal oxide such as ruthenium oxide or the like may be used. The carbon material includes carbon black and graphite powders. The conductive organic polymer material includes polyacetylene, polypyrrole, and polyacene. However, the material is not particularly limited, and any powder can be used as long as it can provide conductivity to electrode layer 2A and is chemically stable against electrolyte 6.

As first binder 13, at least one of an ammonium salt of carboxymethyl cellulose, polyvinyl pyrrolidone, polyvinyl alcohol, methylcellulose, and a hydroxylpropyl cellulose resin is preferably used. As second binder 14, at least one of latex, a urethane resin, and an olefin-based resin is preferably used. First binder 13 not only provides viscosity to electrode paste 16 so as to reduce thixotropy, but also connects particles within activated carbon 11 or activated carbon 11 to conductive agent 12 in electrode layer 2A after being dried, keeps the shape of electrode layer 2A, and connects electrode layer 2A to collector 1A. In order to stably coat electrode paste 16 with a comma coater or a die coater, the viscosity is preferably set to be of about 10⁻¹ to 10² Pa·s.

Second binder 14 mainly connects particles within activated carbon 11 or activated carbon 11 to conductive agent 12 in electrode layer 2A after being dried, keeps the shape of electrode layer 2A, and connects electrode layer 2A to collector 1A. Latex used as second binder 14 is a material in which a polymer material is stably dispersed in an aqueous medium. Latex is classified into three kinds, i.e., natural rubber latex naturally produced by metabolism action of plants, synthetic rubber latex synthesized by an emulsion polymerization method, and artificial latex made by emulsifying and dispersing a solid rubber in water.

As the latex, a kind of synthetic rubber latex such as a latex of a butadiene copolymer, a latex of a diene-based copolymer, a latex of acrylate-based copolymer, a latex of a nitrile rubber, a latex of a chloroprene rubber, a polyurethane-based latex, and the like can be used. However, the kind of latex is not particularly limited, and other kinds of latex can also be used.

The blending ratio of first binder 13 is 5% by weight or less and 1% by weight or more with respect to the total weight of activated carbon 11, conductive agent 12, and first and second binders 13 and 14. By reducing the blending ratio of first binder 13 as low as possible, the layer thickness of first binder 13 covering the surface of activated carbon 13 can be made thin. As a result, reduction in the diffusion rate of ions at low temperature can be suppressed, and thus the resistance of the capacitor can be reduced. However, when the blending ratio of first binder 13 is too low, it becomes difficult to mix, knead, and disperse activated carbon 11, conductive agent 12, first and second binders 13 and 14, and dispersion medium 15, and thus electrode paste 16 cannot be prepared. Thus, it is necessary that 1% by weight or more of first binder 13 be added with respect to the total weight of activated carbon 11, conductive agent 12, and first and second binders 13 and 14. The content of first binder 13 can be reduced because the mixing/stirring machine of planetary-motion type, the high pressure dispersing machine or the high-speed mixer of thin-film revolving type is used.

In addition, first binder 13 can be thermally decomposed after the formation of electrode layer 2A. Therefore, first binder 13 may not be contained in electrode layer 2A when completed. Accordingly, the binder is composed of first and second binders 13 and 14, but first binder 13 may not be contained.

The blending ratio of second binder 14 is 1% by weight or more and 5% by weight or less with respect to the total weight of activated carbon 11, conductive agent 12, and first and second binders 13 and 14. By reducing the blending ratio of second binder 14 as low as possible, the blending ratio of activated carbon 11 can be increased, and thus the capacity of the capacitor can be increased. However, when the blending ratio of second binder 14 is too low, adhesion strength between collector 1A and electrode layer 2A and adhesion strength between particles in electrode layer 2A are small. Thus, electrode 3A cannot be stably formed. Accordingly, it is necessary that 1% by weight or more of second binder 14 be added with respect to the total weight of activated carbon 11, conductive agent 12, and first and second binders 13 and 14.

When the blending ratio of second binder 14 is too high, the area of second binder 14 covering the surface of activated carbon 11 becomes large, or the layer thickness covering the surface of activated carbon 11 becomes thick. As a result, the diffusion rate of ions at low temperature is reduced significantly, which is not preferable. Thus, more specifically, the blending ratio of second binder 14 is preferably 5% by weight or less with respect to the total weight of activated carbon 11, conductive agent 12, and first and second binders 13 and 14.

The weight ratio of activated carbon 11 is preferably from five times to twenty times to the weight ratio of conductive agent 12, inclusive of both boundaries. When the weight ratio is within the above-described range, the blending ratio of activated carbon 11 can be 80% or more, and thus the capacity of the capacitor can be increased.

The specific surface area of conductive agent 12 is smaller than that of activated carbon 11. Thus, when the weight ratio of activated carbon 11 in electrode layer 2A is less than five times the weight ratio of conductive agent 12, the total surface area of activated carbon 11 and conductive agent 12 becomes small, and thus the layer thicknesses of first and second binders 13 and 14 covering the surface of activated carbon 11 become thick. As a result, the effect of reducing the resistance of the capacitor by suppressing the reduction of the diffusion rate of ions at low temperature cannot be expected. Furthermore, since the surface area is small, the contacting area between activated carbon 11 as a solid and electrolyte 6 as a liquid becomes small, and thus the capacity of the capacitor is reduced. On the other hand, when the weight ratio of activated carbon 11 in electrode layer 2A is more than twenty times the weight ratio of conductive agent 12, the blending ratio of conductive agent 12 is too low. Thus, conductivity in electrode layer 2A is lowered, and the resistance value of the capacitor is increased.

In order to increase the capacity of the capacitor, it is necessary that electrode layer 2A include a large amount of activated carbon 11. Thus, the density of electrode layer 2A is preferably 0.45 g/cm³ or more. On the other hand, when the density of electrode layer 2A is 0.7 glcm³ or less, electrode layer 2A can be easily impregnated with electrolyte 6.

Next, a process of assembling the capacitor will be described. Electrodes 3A and 3B prepared by the above-described method are cut in a predetermined size. Leads 7 are respectively attached to collectors 1A and 1B, and electrodes 3A and 3B are arranged so as to be opposed to each other with separator 5 interposed therebetween, and wound. Then, the wound body is dipped in electrolyte 6 to impregnate electrodes 3A, 3B and separator 5 with electrolyte 6. Finally, the wound body including electrodes 3A, 3B and separator 5 are inserted into bottomed cylindrical case 4, and case 4 is sealed using sealing material 8. The wound type capacitor is thus obtained.

An effect of the present invention will be described below in conjunction with specific examples according to embodiments of the present invention. First, structures of electrodes 3A and 3B in a capacitor of sample A and a method for manufacturing the same will be described.

Activated carbon 11 having a specific surface area of 2,000 m²/g and average particle diameter D₅₀ of 3 µm is subjected to an alkali activation treatment by KOH. In this way, the specific surface of activated carbon 11 is made to be about 100 m²/g to 2,700 m²/g. Acetylene black is used as conductive agent 12. An ammonium salt of carboxymethyl cellulose (hereinafter abbreviated as CMC) is used as first binder 13, and a latex of butadiene copolymer, which is one of synthetic rubber latex, is used as second binder 14. These materials are blended so as to have the weight ratio of the solid part of 90:5:2:3, water as dispersion medium 15 is added thereto, and the resultant material is mixed, kneaded, and dispersed using the mixing/stirring machine of planetary-motion type (S01). Accordingly, electrode paste 16 is prepared. Here, the weight ratio of the solid part in electrode paste 16 is 30% by weight.

Then, dispersibility of electrode paste 16 is further enhanced by using the high pressure dispersing machine. The high pressure dispersing machine generally includes a pressuerizing part for applying pressure to electrode paste 16, and a dispersing and mixing part constructed of diamond, ceramic or ultrahard metal. Ceramic is used for the dispersing and mixing part in preparing sample A. Here, electrode paste 16 may be dispersed one time or more by the pressurizing part of the high pressure dispersing machine at a pressure of 100 kg/cm² or more. By carrying out this dispersing operation, the dispersibility is further improved. More specifically, electrode paste 16 is pressurized at 300 kg/cm² by the high pressure dispersing machine and dispersed three times.

Electrode paste 16 thus obtained is coated on both surfaces of collectors 1A and 1B by the comma coater (S02). An aluminum foil having a surface roughened by an etching treatment and having a thickness of 20 µm is used for collectors 1A and 1B. Further, the temperature of electrode paste 16 is kept at 25°C while electrode paste 16 is coated. Coating conditions are adjusted and electrode paste 16 is coated so that electrode layer 2A has the thickness of 130 µm. That is, electrode paste 16 is coated so that electrode 3A has the thickness of 280 µm.

Then, coated electrode paste 16 is dried at the temperature of 90°C so as to remove water as dispersion medium 15 (S03). Electrodes 3A and 3B thus obtained are further pressed using the roll pressing machine. At this time, electrodes 3A is pressed so that the thickness of electrode layer 2A after the press process will be 90% of the thickness of electrode layer 2A before the press process. That is, after the press process, the thickness of electrode 3A is about 250 µm, and the thickness of electrode layer 2A is about 115 µm. The density of electrode layer 2A in this state is 0.55 g/cm³.

Electrodes 3A and 3B manufactured through the above-described processes are cut in the size of 40 mm × 300 mm. Then, leads 7 made of aluminum are respectively attached to collectors 1A and 1B, and electrodes 3A and 3B are arranged so as to be opposed to each other via separator 5 made of paper interposed therebetween, and wound. Thereafter, the wound body is dipped in electrolyte 6, and thus electrodes 3A, 3B, and separator 5 are impregnated with electrolyte 6. As electrolyte 6, a solution prepared by dissolving tetraethylammonium tetrafluoroborate in propylenecarbonate so as to have the concentration of 1.0 M is used.

Finally, the wound body including electrodes 3A, 3B and separator 5 is inserted into bottomed cylindrical case 4, and case 4 is sealed using sealing material 8. In this way, the capacitor as sample A is completed.

A capacitor as sample B is manufactured through processes similar to those of sample A except that activated carbon 11, conductive agent 12, first binder 13, and second binder 14 are blended so as to have the weight ratio of each solid part be 88:6:4:2.

A capacitor as sample C is manufactured through similar processes to those of sample B except that polytetrafluoroethylene (PTFE) which is a kind of a fluoride"based polymer is used as second binder 14.

A capacitor as sample D is manufactured through similar processes to those of sample A except that activated carbon 11, conductive agent 12, first binder 13, and second binder 14 are blended so as to have the weight ratio of each solid part be 80:16:2:2.

A capacitor as sample E is manufactured through similar processes to those of sample A except that the thickness of electrode layer 2A is made thinner. That is, electrode paste 16 is coated to collectors 1A and 1B so that electrodes 3A and 3B have the thicknesses of 60 µm and electrode layers 2A and 2B have the thicknesses of 20 µm. The thicknesses of electrodes 3A and 3B after the pressing are 56 µm, the thicknesses of electrodes 2A and 2B after the pressing are 18 µm, and the sizes of electrodes 3A and 3B are 40 mm × 1,000 mm.

Capacitors as samples F, G and H are manufactured through similar processes to those of sample E except that electrode pastes 16 having electrode compositions similar to that of samples B, C and D are used, respectively.

A capacitor as sample J is manufactured through similar processes to those of sample A except that the thickness of electrode layer 2A is further made thinner than in sample E in order to make resistance even lower. That is, electrode paste 16 is coated to collectors 1A and 1B so that electrode layers 2A and 2B have the thicknesses of 5 µm after the pressing, and electrodes 3A and 3B have the sizes of 40 mm × 1,250 mm.

A capacitor as sample K is manufactured through similar processes to those of sample A except that electrode paste 16 is coated to collectors 1A and 1B so that electrode layers 2A and 2B have the thicknesses of 50 µm after the pressing, and electrodes 3A and 3B have the sizes of 40 mm × 550 mm.

A capacitor as sample L is manufactured through similar processes to those of sample A except that electrode paste 16 is coated to collectors 1A and 1B so that electrode layers 2A and 2B have the thicknesses of 130 µm after the pressing, and electrodes 3A and 3B have the sizes of 40 mm × 270 mm.

A capacitor as sample M is manufactured through similar processes to those of sample A except that activated carbon 11, conductive agent 12, first binder 13, and second binder 14 are blended so as to have the weight ratio of each solid part of 87:6:5:2.

A capacitor as sample N is manufactured through similar processes to those of sample A except that activated carbon 11, conductive agent 12, first binder 13, and second binder 14 are blended so as to have the weight ratio of each solid part of 88:6:5:1.

A capacitor as sample O is manufactured through similar processes to those of sample A except that activated carbon 11, conductive agent 12, first binder 13, and second binder 14 are blended so as to have the weight ratio of each solid part of 84:6:5:5.

A capacitor as sample P is manufactured through similar processes to those of sample A except that activated carbon 11 having average particle diameter D₅₀ of 2 µm, conductive agent 12, first binder 13, and second binder 14 are blended.

A capacitor as sample Q is manufactured through similar processes to those of sample A except that activated carbon 11 having average particle diameter D₅₀ of 5µm, conductive agent 12, first binder 13, and second binder 14 are blended.

A capacitor as sample W is manufactured with reference to Unexamined Japanese Patent Publication No. 2000-12404 for the purpose of comparing with the above-described samples. First, activated carbon, acetylene black as a conductive agent, and PTFE and a latex of butadiene copolymer as binders are blended so as to have the weight ratio of each solid part of 70:20:5:5. After that, an electrode paste is prepared by using a mixed liquid of toluene and N-methylpyrrolidone in the weight ratio of 1:1 as a dispersion medium. The weight ratio of the solid part of the electrode paste is adjusted to 29%. Then, the electrode paste is coated to a collector by a roll coater so that the electrode layer has the thickness of 130 µm on one side. Then, the capacitor as sample W is manufactured through similar processes to those of sample A.

A capacitor as sample X is manufactured through similar processes to those of sample A except that an ammonium salt of CMC and PTFE are used as binders, and the activated carbon, the conductive agent, the ammonium salt of CMC, and PTFE are blended so as to have the weight ratio of each solid part of 80:10:8:2.

A capacitor as sample Y is manufactured through similar processes to those of sample A except that electrode paste 16 is coated to collectors 1A and 1B so that electrode layers 2A and 2B have the thicknesses of 140 µm after the pressing, and electrodes 3A and 3B have the sizes of 40 mm × 250 mm.

A capacitor as sample Z is manufactured through similar processes to those of sample A except that activated carbon 11 having average particle diameter D₅₀ of 8 µm, conductive agent 12, first binder 13, and second binder 14 are blended.

Elements of each of the capacitors of samples A to L and samples W to Z, which are manufactured through the above-described processes, are shown in Table 1.

**Table 1**

| Sample | Activated Carbon (%) | Conductive agent | First Binder | Second binder | | Thickness of Electrode Layer (µm) | Particle Diameter of Activated Carbon (µm) |
|---|---|---|---|---|---|---|---|
| | | Acetylene Black (%) | CMC Ammonium Salt (%) | Butadiene Copolymer (%) | PTFE (%) | | |
| A | 90 | 5 | 2 | 3 | 0 | 115 | 3 |
| B | 88 | 6 | 4 | 2 | 0 | | |
| C | 88 | 6 | 4 | 0 | 2 | | |
| D | 80 | 16 | 2 | 2 | 0 | | |
| E | 90 | 5 | 2 | 3 | 0 | 18 | |
| F | 88 | 6 | 4 | 2 | 0 | | |
| G | 88 | 6 | 4 | 0 | 2 | | |
| H | 80 | 16 | 2 | 2 | 0 | | |
| J | 90 | 5 | 2 | 3 | 0 | 5 | |
| K | 90 | 5 | 2 | 3 | 0 | 50 | |
| L | 90 | 5 | 2 | 3 | 0 | 130 | |
| M | 87 | 6 | 5 | 2 | 0 | 115 | |
| N | 88 | 6 | 5 | 1 | 0 | | |
| O | 84 | 6 | 5 | 5 | 0 | | |
| P | 90 | 5 | 2 | 3 | 0 | | 2 |
| Q | 90 | 5 | 2 | 3 | 0 | | 5 |
| W | 70 | 20 | 0 | 5 | 5 | 115 | 3 |
| X | 80 | 10 | 8 | 0 | 2 | 115 | |
| Y | 90 | 5 | 2 | 3 | 0 | 140 | |
| Z | 90 | 5 | 2 | 3 | 0 | 115 | 8 |

A method for evaluating these capacitors will be described below. Each capacitor is applied with a constant voltage of 2.0 V in a thermostatic chamber at 60°C for 12 hours. Thereafter, the capacitor is discharged once. The capacitor is moved to an environment at ordinary temperature (25°C), and charged with a constant voltage of 2.0 V for 5 minutes. Then, the capacity of the capacitor at the time of discharging at a constant current of 1A is measured, and the direct-current resistance (hereinafter referred to as DCR) obtained from a value of voltage drop during initial 0.5 seconds is measured. Next, the capacitor is transferred to a thermostatic chamber at -30°C, and the capacity and the DCR are measured by a method similar to that used in the environment at the ordinary temperature. In this way, the capacity and the DCR at the ordinary temperature and those at low temperature are measured, and the results thereof are shown in Table 2.

**Table 2**

| Sample | Ordinary temperature | | Low temperature | |
|---|---|---|---|---|
| | Capacity (F) | DCR (mΩ) | Capacity (F) | DCR (mΩ) |
| A | 98 | 42 | 95 | 137 |
| B | 105 | 43 | 98 | 150 |
| C | 104 | 43 | 98 | 152 |
| D | 97 | 40 | 96 | 155 |
| E | 62 | 24 | 62 | 48 |
| F | 62 | 24 | 62 | 51 |
| G | 51 | 24 | 50 | 52 |
| H | 62 | 24 | 62 | 51 |
| J | 18 | 14 | 18 | 39 |
| K | 78 | 19 | 77 | 43 |
| L | 107 | 48 | 100 | 160 |
| M | 100 | 43 | 97 | 158 |
| N | 104 | 43 | 98 | 155 |
| O | 95 | 44 | 92 | 165 |
| P | 98 | 50 | 96 | 138 |
| Q | 95 | 44 | 70 | 215 |
| W | 80 | 115 | 79 | 287 |
| X | 95 | 48 | 92 | 170 |
| Y | 109 | 52 | 102 | 800 |
| Z | 90 | 57 | 27 | 670 |

When the values of capacity of samples A to D are compared with that of sample W, the values of capacity of samples A to D are larger than that of sample W in both environments at the ordinary temperature and the low temperature. This is because the blending ratio of activated carbon 11 can be increased.

Further, when the values of DCR of samples A to D are compared with that of sample W, the values of DCR of samples A to D are about 1/2 times that of sample W in both environments at the ordinary temperature and the low temperature. Thus, the values of DCR of samples A to D are remarkably lower than that of sample W in both environments at the ordinary temperature and the low temperature. This is because the resistance at interfaces between collectors 1A and 1B and electrodes 2A and 2B are more lowered than that of sample W due to coating electrode paste 16 using the comma coater in manufacturing samples A to D. In order to form the electrode layer to have the thickness of sample W by the roll coater, an adhesive is coated in advance on the collector, the pre-formed electrode layers are bonded thereon, and the collector and electrode layers are roll-pressed. Therefore, the adhesive conducts as a resistance component.

Next, when the values of capacity of samples A to D are compared with that of sample X, the values of capacity of samples A to D are larger than that of sample X in both environments at the ordinary temperature and the low temperature. This is because the blending ratio of activated carbon 11 can be increased.

Further, when the values of DCR of samples A to D are compared with that of sample X, the values of DCR of samples A to D are smaller than that of sample X in both environments at the ordinary temperature and the low temperature. Particularly, the values of DCR of samples A to D are remarkably smaller than that of sample X in the environment at the low temperature. This is because the blending ratio of the ammonium salt of CMC in samples A to D is smaller than that of sample X, so that the layer thickness of the ammonium salt of CMC covering the surface of the activated carbon can be made thinner than that of sample X. Thus, the reduction in diffusion rate of ions is possibly suppressed particularly at the low temperature, and thus the resistance of the capacitor can be reduced.

When the values of capacity of samples E to H are compared with that of sample W, the values of capacity of samples E to H are smaller than that of sample W in both environments at the ordinary temperature and the low temperature. This is because the weight of activated carbon 11 contained in the capacitor is reduced by making the thicknesses of electrode layers 2A and 2B thinner in samples E to H than in sample W.

On the other hand, when the values of DCR are compared between samples E to H and sample W, the values of DCR of samples E to H are about 1/5 times that of sample W in both environments at the ordinary temperature and the low temperature, and thus the values of DCR of samples E to H are remarkably lower than that of sample W. This is possibly caused by the following two factors. That is, samples E to H are coated with electrode paste 16 using the comma coaster Thus, the resistance at interfaces between collectors 1A and 1B and electrode layers 2A and 2B is smaller than that of sample W. Further, in samples E to H, since the thicknesses of electrodes 3A and 3B are made thin, the areas of electrodes 3A and 3B to be inserted into case 4 are larger than those of sample W

Furthermore, when the values of capacity of samples E to H are compared with that of sample X, the values of capacity of samples E to H are smaller than that of sample X in both environments at the ordinary temperature and the low temperature. This is because the weight of activated carbon 11 contained in the capacitor is reduced by making the thicknesses of electrode layers 2A and 2B thinner in samples E to H than in sample X.

When values of DCR are compared between samples E to H and sample X, the values of DCR of samples E to H are about 1/2 times that of sample X at the ordinary temperature, and are about 1/3 times that of sample X at the low temperature. Thus, the values of DCR of samples E to H are remarkably smaller than that of sample X. This is possibly caused by the following two factors. That is, in samples E to H, since the blending ratio of the ammonium salt of CMC is smaller than that in sample X, the layer thickness of the ammonium salt of CMC covering the surface of activated carbon 11 is thinner than that of sample X. Further, in samples E to H, since the thicknesses of electrodes 3A and 3B are made thin, the areas of electrodes 3A and 3B to be inserted into case 4 are larger than those of sample X.

Samples A, E, J, K, L and Y are compared hereinafter. The thicker the thicknesses of electrode layers 2A and 2B are, the larger the capacity is. Further, when the thicknesses of electrode layers 2A and 2B are 140 µm, the value of DCR at the low temperature is remarkably larger than those in the cases where the thicknesses are from 5 µm to 130 µm. Thus, in view of reducing the resistance, the thicknesses of electrode layers 2A and 2B are preferably from 5 µm to 130 µm, inclusive of both boundaries. In addition, an attempt to make the thicknesses of electrode layers 2A and 2B to be less than 5 µm only results in the increased variation of thickness, and thus such a sample is not manufactured.

Samples A, B and M are compared next. The larger the blending ratio of the ammonium salt of CMC is, the larger the value of DCR at the low temperature is. In view of reducing the resistance, the blending ratio of first binder 13 is preferably 5% by weight or less.

Samples M, N and O are compared next. The larger the blending ratio of the butadiene copolymer is, the larger the value of DCR at the low temperature is. In view of reducing the resistance, the blending ratio of second binder 14 is preferably 5% by weight or less. When the blending ratio of second binder 14 is less than 1% by weight, the adhesion strength between collectors 1A and 1B and electrode layers 2A and 2B and the adhesion strength between each particle in electrode layers 2A and 2B become small, and thus electrode 3A cannot be obtained. Therefore, the blending ratio of second binder 14 is preferably from 1% by weight to 5% by weight, inclusive of both boundaries.

Samples A, P, Q and Z are compared next. When the particle diameter of the activated carbon is 3 µm, the resistance is the smallest in both environments at the ordinary temperature and the low temperature. When the particle diameter of the activated carbon is less than 2 µm, the resistance is increased, and electrode paste 16 cannot be made unless the blending ratio of first binder 13 is increased. On the other hand, when the particle diameter of the activated carbon is more than 5 µm, the resistance at the low temperature is remarkably large, and the capacity at the low temperature is remarkably reduced. Therefore, the particle diameter of the activated carbon is preferably from 2 µm to 5 µm, inclusive of both boundaries.

Although a wound type capacitor is described in the foregoing embodiment of the present invention, the structure of the capacitor is not limited to the wound type, and a laminated type or other structures may be adopted.

### INDUSTRIAL APPLICABILITY

A capacitor having a polarizable electrode layer according to the present invention has large capacity and low direct-current resistance at the low temperature, and thus is advantageous in its ability to function in the environment at low temperature when applied to a brake power assistance in a vehicle, and a drive assistance in a hybrid vehicle, and various kinds of electric devices.

## Claims

1. A polarizable electrode comprising:
a collector (1A, 1B); and
a polarizable electrode layer (2A,2B) provided on a surface of the collector and having a thickness of at thinnest 5 µm and at thickest 130 µm, the polarizable electrode layer containing:
activated carbon (11);
a conductive agent (12); and
a binder,
wherein the binder contains:
a first binder (13) having a content of at least 1% and at most 5% by weight with respect to a total weight of the activated carbon, the conductive agent, and the binder, and being composed of at least one of an ammonium salt of carboxymethyl cellulose, polyvinylpyrolidone, polyvinylalcohol, methylcellulose, and a hydroxylpropyl cellulose resin; and
a second binder (14) having a content of at least 1% and at most 5% by weight with respect to a total weight of the activated carbon, the conductive agent, and the first and second binders, and being composed of at least one of latex, a fluoride-based polymer, a urethane resin, and an olefm based resin, and
**characterized in that** the activated carbon (11) has an average particle diameter D₅₀ of a value in a range from 2 µm to 5 µm inclusive.

2. A capacitor comprising:
the polarizable electrode according to claim 1;
a second polarizable electrode having a similar constitution to that of the polarizable electrode;
a separator sandwiched between the polarizable electrode and the second polarizable electrode; and
an electrolyte impregnated in the polarizable electrode, the second polarizable electrode, and the separator.

3. A method for manufacturing a polarizable electrode, the method comprising:
a first step of preparing an electrode paste (16) by mixing and kneading activated carbon (11), a conductive agent (12), a binder, and a dispersion medium;
a second step of coating the electrode paste (16) on at least one side of a collector (1A,1B); and
a third step of removing the dispersion medium from the coated electrode paste and so as to form a polarizable electrode layer having a thickness of at thinnest 5 µm and at thickest 130 µm on a surface of the collector,
wherein the binder contains:
a first binder (13) having a content of at least 1% and at most 5% by weight with respect to a total weight of the activated carbon, the conductive agent, and the binder, and being composed of at least one of an ammonium salt of carboxymethyl cellulose, polyvinylpyrolidone, polyvinylalcohol, methylcellulose, and a hydroxylpropyl cellulose resin; and
a second binder (14) having a content of at least 1% and at most 5% by weight with respect to a total weight of the activated carbon, the conductive agent, and the first and second binders, and being composed of at least one of latex, a fluoride-based polymer, a urethane resin, and an olefin based resin
**characterized in that** the activated carbon (11) has an average particle diameter D₅₀ of a value in a range from 2 µm to 5 µm inclusive.

4. The method for manufacturing a polarizable electrode according to claim 4, wherein one of a comma coater and a die coater is used in the second step.

## Patentansprüche

1. Polarisierbare Elektrode, umfassend:
einen Kollektor (1A, 1B); und
eine polarisierbare Elektrodenschicht (2A, 2B), die auf einer Oberfläche des Kollektors vorgesehen ist und eine Stärke von mindestens 5 µm und höchstens 130 µm aufweist, wobei die polarisierbare Elektrodenschicht Folgendes enthält:
Aktivkohle (11);
ein leitfahiges Agens (12); und
einen Binder,
wobei der Binder Folgendes enthält:
einen ersten Binder (13), der einen Gehalt von mindestens 1 und höchstens 5 Gew.-% bezüglich eines Gesamtgewichts der Aktivkohle, des leitfähigen Agens und des Binders aufweist und aus zumindest einem von einem Ammoniumsalz von Carboximethylcellulose, Polyvinylpurrolidon, Polyvinylalkohol, Methylcellulose und einem Hydroxylpropylcelluloseharz gebildet ist; und
einen zweiten Binder (14), der einen Gehalt von mindestens 1 und höchstens 5 Gew.-% bezüglich eines Gesamtgewichts der Aktivkohle, des leitfähigen Agens und des ersten und zweiten Binders aufweist und aus zumindest einem von Latex, einem fluoridbasiertem Polymer, einem Urethanharz und einem olefinbasiertem Harz gebildet ist, und
**dadurch gekennzeichnet, dass** die Aktivkohle (11) einen mittleren Partikeldurchmesser D₅₀ eines Werts in einem Bereich von 2 µm bis einschließlich 5 µm aufweist.

2. Kondensator, umfassend:
die polarisierbare Elektrode gemäß Anspruch 1;
eine zweite polarisierbare Elektrode mit einer ähnlichen Konstitution wie jene der polarisierbaren Elektrode;
einen Separator, der in Sandwichbauweise zwischen der polarisierbaren Elektrode und der zweiten polarisierbaren Elektrode eingeschoben ist; und
ein Elektrolyt, das in der polarisierbaren Elektrode, der zweiten polarisierbaren Elektrode und dem Separator imprägniert ist.

3. Verfahren zum Fertigen einer polarisierbaren Elektrode, das Verfahren umfassend:
einen ersten Schritt des Herstellens einer Elektrodenpaste (16) durch Vermischen und Verkneten von Aktivkohle (11), einem leitfähigen Agens (12), einem Binder und einem Dispersionsmittel;
einen zweiten Schritt des Auftragens der Elektrodenpaste (16) auf zumindest eine Seite eines Kollektors (1A, 1B); und
einen dritten Schritt des Entfernens des Dispersionsmittels aus der aufgetragenen Elektrodenpaste und dadurch Ausbilden einer polarisierbaren Elektrodenschicht mit einer Stärke von mindestens 5 µm und höchstens 130 µm auf einer Oberfläche des Kollektors,
wobei der Binder Folgendes enthält:
einen ersten Binder (13), der einen Gehalt von mindestens 1 und höchstens 5 Gew.-% bezüglich eines Gesamtgewichts der Aktivkohle, des leitfähigen Agens und des Binders aufweist und aus zumindest einem von einem Ammoniumsalz von Carboximethylcellulose, Polyvinylpurrolidon, Polyvinylalkohol, Methylcellulose und einem Hydroxylpropylcelluloseharz gebildet ist; und
einen zweiten Binder (14), der einen Gehalt von mindestens 1 und höchstens 5 Gew.-% bezüglich eines Gesamtgewichts der Aktivkohle, des leitfähigen Agens und des ersten und zweiten Binders aufweist und aus zumindest einem von Latex, einem fluoridbasiertem Polymer, einem Urethanharz und einem olefinbasiertem Harz gebildet ist,
**dadurch gekennzeichnet, dass** die Aktivkohle (11) einen mittleren Partikeldurchmesser D₅₀ eines Werts in einem Bereich von 2 µm bis einschließlich 5 µm aufweist.

4. Verfahren zum Fertigen einer polarisierbaren Elektrode gemäß Anspruch 4, wobei im zweiten Schritt eines von einer Kommabeschichtungsvorrichtung und einer Düsenbeschichtungsvorrichtung benutzt wird.

## Revendications

1. Electrode polarisable comprenant :
un collecteur (1A, 1B) ; et
une couche d'électrode polarisable (2A, 2B) prévue sur une surface du collecteur et ayant une épaisseur de 5 µm ou plus et de 130 µm ou moins, la couche d'électrode polarisable contenant :
un charbon actif (11) ;
un agent conducteur (12) ; et
un liant,
où le liant contient :
un premier liant (13) ayant une teneur d'au moins 1% et d'au plus 5% en poids par rapport à un poids total du charbon actif, de l'agent conducteur, et du liant, et étant composé d'au moins l'un(e) d'un sel d'ammonium d'un carboxyméthylcellulose, d'un polyvinylpyrrolidone, d'un alcool polyvinylique, d'une méthylcellulose, et d'une résine hydroxypropylcellulose ; et
un deuxième liant (14) ayant une teneur d'au moins 1% et d'au plus 5% en poids par rapport à un poids total du charbon actif, de l'agent conducteur, et des premier et deuxième liants, et étant composé d'au moins l'un(e) du latex, d'un polymère à base de fluorure, d'une résine uréthanique, et d'une résine à base d'oléfine, et
**caractérisée en ce que** le charbon actif (11) présente un diamètre moyen de particules D₅₀ d'une valeur dans une plage allant de 2 µm à 5 µm inclus.

2. Condensateur comprenant :
l'électrode polarisable selon la revendication 1 ;
une deuxième électrode polarisable ayant une constitution semblable à celle de l'électrode polarisable ;
un séparateur pris en tenailles entre l'électrode polarisable et la deuxième électrode polarisable ; et
un électrolyte imprégné dans l'électrode polarisable, la deuxième électrode polarisable, et le séparateur.

3. Procédé de fabrication d'une électrode polarisable, le procédé comprenant :
une première étape permettant de préparer une pâte pour les électrodes (16) en mélangeant et en malaxant un charbon actif (11), un agent conducteur (12), un liant et un agent de dispersion ;
une deuxième étape permettant d'enduire la pâte pour les électrodes (16) sur au moins un côté d'un collecteur (1A, 1D) : et
une troisième étape permettant d'éliminer l'agent de dispersion à partir de la pâte pour les électrodes enduite et de former ainsi une couche d'électrode polarisable ayant une épaisseur de 5 µm ou plus et de 130 µm ou moins sur une surface du collecteur,
où le liant contient :
un premier liant (13) ayant une teneur d'au moins 1% et d'au plus 5% en poids par rapport à un poids total du charbon actif, de l'agent conducteur, et du liant, et étant composé d'au moins l'un(e) d'un sel d'ammonium d'un carboxyméthylcellulose, d'un polyvinylpyrrolidone, d'un alcool polyvinylique, d'une méthylcellulose, et d'une résine hydroxypropylcellulose ; et
un deuxième liant (14) ayant une teneur d'au moins 1% et d'au plus 5% en poids par rapport à un poids total du charbon actif, de l'agent conducteur, et des premier et deuxième liants, et étant composé d'au moins l'un(e) du latex, d'un polymère à base de fluorure, d'une résine uréthanique, et d'une résine à base d'oléfine
**caractérisé en ce que** le charbon actif (11) présente un diamètre moyen de particules D₅₀ d'une valeur dans une plage allant de 2 µm à 5 µm inclus.

4. Procédé de fabrication d'une électrode polarisable selon la revendication 4, dans lequel l'un d'un dispositif d'enduction à virgule et d'un dispositif d'enduction à filière est utilisé dans la deuxième étape.
